# DEMANDE DE BREVET EUROPEEN

(11) **EP 1 707 431 A2**
(43) Date de publication de la demande: **04.10.2006**
(21) Numéro de dépôt: 06350001.1
(22) Date de dépôt: 19.01.2006
(51) Int. Cl.: B60N 2/04, B60N 2/36, B60N 3/06

(54) **Dispositif de manoeuvre d'un siège de véhicule**

(30) Priorité: 29.03.2005 FR 0503028
(71) Demandeur: Heuliez, 79140 Cerizay (FR)
(72) Inventeur: Queveau, Gérard, 79140 Le Pin (FR); Queveau, Paul, 79140 Montravers (FR); Leclerre, Frédéric, 91300 Massy (FR)
(74) Mandataire: Tournel, Jean Louis

(57) **Abrégé**

L'invention a pour objet un dispositif de manoeuvre d'un siège de voiture comprenant une assise (2) et un dossier (3), ce dispositif de manoeuvre étant caractérisé en ce qu'il comprend des moyens( 5) pour, à partir d'une position dite normale du siège, déplacer le siège vers une position dite de confort où le siège est reculé tout en le basculant en sorte de lever le bord avant de l'assise.

## Description

L'invention se rapporte à un dispositif de manoeuvre d'un siège de voiture.

Elle se rapporte également au siège équipé du dispositif de manoeuvre.

Par siège on comprendra tant un siège individuel qu'une banquette.

Un siège comporte une assise et un dossier.

Actuellement, contrairement au siège conducteur qui est équipé de nombreux systèmes de réglages, pour la hauteur de l'assise, l'inclinaison du dossier, la position plus ou moins avancée par rapport au volant, la majorité des sièges situés à l'arrière des véhicules sont dépourvus de ces réglages.

Cependant, certains sièges coulissent de l'avant vers l'arrière afin de libérer plus d'espace pour les jambes au détriment du volume du coffre.

Il est parfois prévu que le dossier du siège puisse s'incliner légèrement indépendamment de l'assise.

Outre ces dispositifs de réglages, de plus en plus de sièges arrières comportent des dispositifs permettant de rabattre le dossier et l'assise afin d'augmenter, provisoirement, le volume de charge du coffre.

Généralement, la banquette est articulée sur son bord avant afin de basculer vers l'avant pour être mise en position verticale et occuper l'espace dédié aux jambes des passagers arrières et le dossier se rabat vers l'avant pour occuper la position de l'assise.

Différentes problématiques apparaissent dans la manière de replier ces sièges comme notamment celle d'offrir un espace de chargement plat.

On connaît par exemple un siège (EP-A-1 .375.243) qui, pour passer de sa position d'utilisation à sa position escamotée, a un mouvement essentiellement vertical afin d'abaisser l'assise et la rentrer dans une cavité, le dossier étant alors rabattu vers l'avant contre l'assise.

La hauteur du déplacement vertical correspondant à l'épaisseur du dossier et la partie du plancher sur lequel repose le siège est plus basse que le plancher du coffre de sorte qu'en position escamotée, la face arrière du dossier soit dans le même plan que le plancher du coffre.

On connaît également un siège de voiture US-A-6.540.295 dont l'assise est montée sur un jeu de biellette en sorte de pouvoir passer l'assise d'une position dite d'utilisation vers une position dite basse par déplacement de l'assise vers l'avant. Le dossier est quant a lui articulé sur l'assise et sur un axe médian de sorte que le dossier peut être pivoté de 180 ° autour de l'axe médian puis rabattu vers l'arrière. Une plaque de protection équipant la face arrière du dossier est alors dépliée au dessus de l'assise et dans l'espace entre le siège considéré et le siège avant. Cette solution occupe une faible hauteur mais une étendue très importante ce qui est un inconvénient.

Une autre problématique apparaît lorsque l'on souhaite que les passagers arrières puissent être confortablement installés et par exemple puissent s'assoupir.

A ce jour, on peut éventuellement régler l'orientation du dossier mais tous ces réglages individuels augment le coût et la complexité des sièges.

L'invention propose d'apporter une nouvelle solution simple aux problèmes évoqués ci-avant.

A cet effet l'invention a pour objet un dispositif de manoeuvre d'un siège de voiture comprenant une assise et un dossier, ce dispositif de manoeuvre étant caractérisé en ce qu'il comprend des moyens pour, à partir d'une position dite normale du siège, déplacer le siège vers une position dite de confort où le siège est reculé tout en le basculant en sorte de lever le bord avant de l'assise.

L'invention a également pour objet le siège pourvu du dispositif de manoeuvre.

L'invention sera bien comprise à la lecture de la description ci-après faite à titre d'exemple non limitatif en regard du dessin qui représente schématiquement :
FIG 1 : Un siège en position normale d'utilisation
FIG 2 : Un siège en position de confort
FIG 3 : Un siège en position compactée
FIG 4 : Une variante de siège en position normale
FIG 5 : Le siège de la Figure 4 en position de confort.

En se reportant au dessin on voit un siège 1 ou une banquette comportant une assise 2 et un dossier 3.

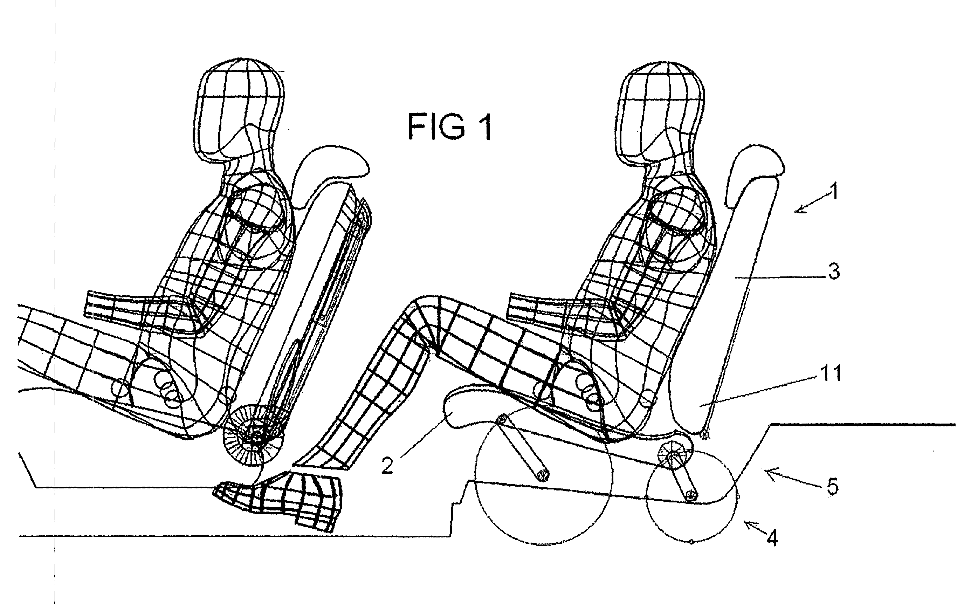

Les figures 1 à 3 montrent une solution technique.

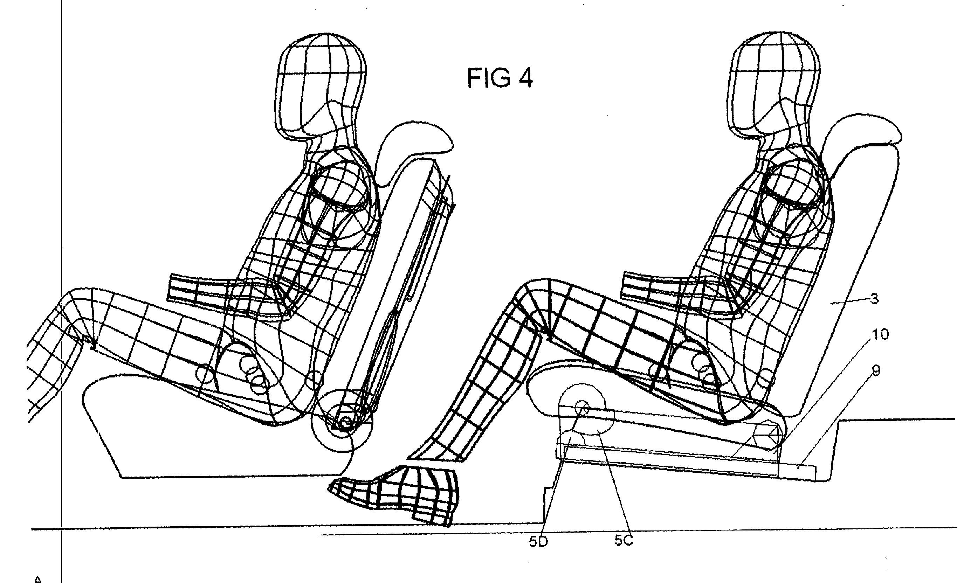

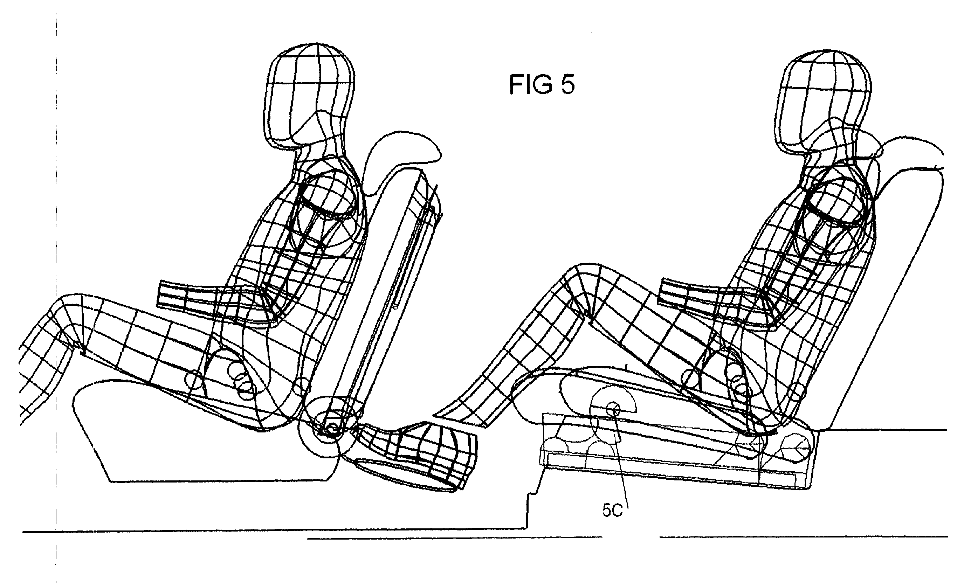

Les figures 4 et 5 montrent une variante de réalisation.

Tant pour l'assise que le dossier, ces éléments comportent une structure portante rigide recouverte par au moins une couche de mousse souple.

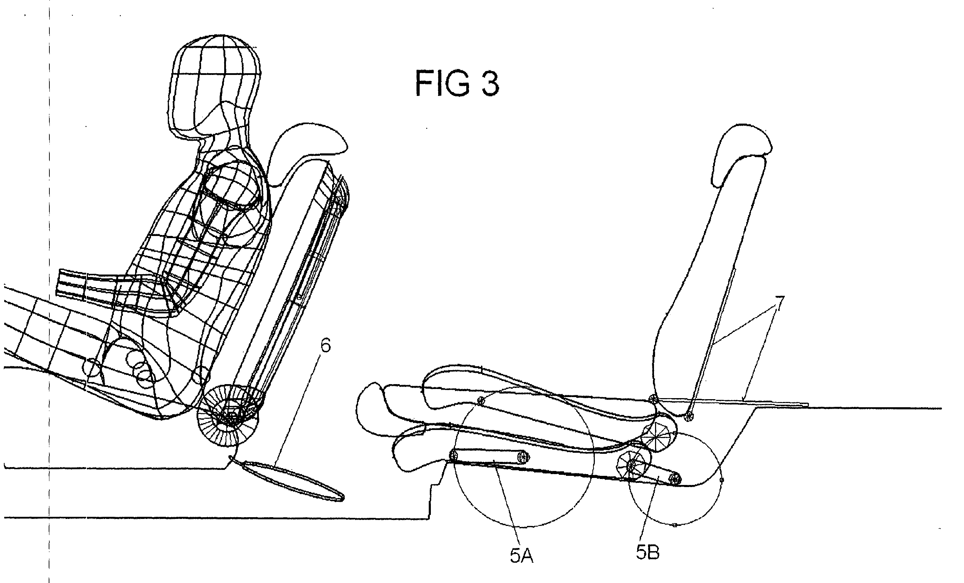

La base 11 du dossier est montée sur une articulation (non représentée) portée par l'assise en sorte de pouvoir basculer le dossier vers l'avant et venir s'appuyer sur l'assise (fig3).

La face supérieure de l'assise et la face avant du dossier peuvent avoir des formes qui s'emboîtent au mieux pour réduire l'épaisseur du siège en position compactée.

Un verrou (non représenté) maintien le dossier dans la position requise. Eventuellement, en position normale d'utilisation (figure 1), le dossier pourrait être associé à l'assise par un moyen de réglage permettant au dossier de prendre différentes inclinaisons par rapport à l'assise.

Un dispositif 4 de manoeuvre placé à la base du siège permet de déplacer le siège en différentes positions.

Selon l'invention, le dispositif 4 de manoeuvre comprend des moyens 5 dits de manoeuvre pour, à partir d'une position dite normale du siège, déplacer le siège vers une position dite de confort où le siège est reculé tout en le basculant en sorte de lever le bord avant de l'assise.

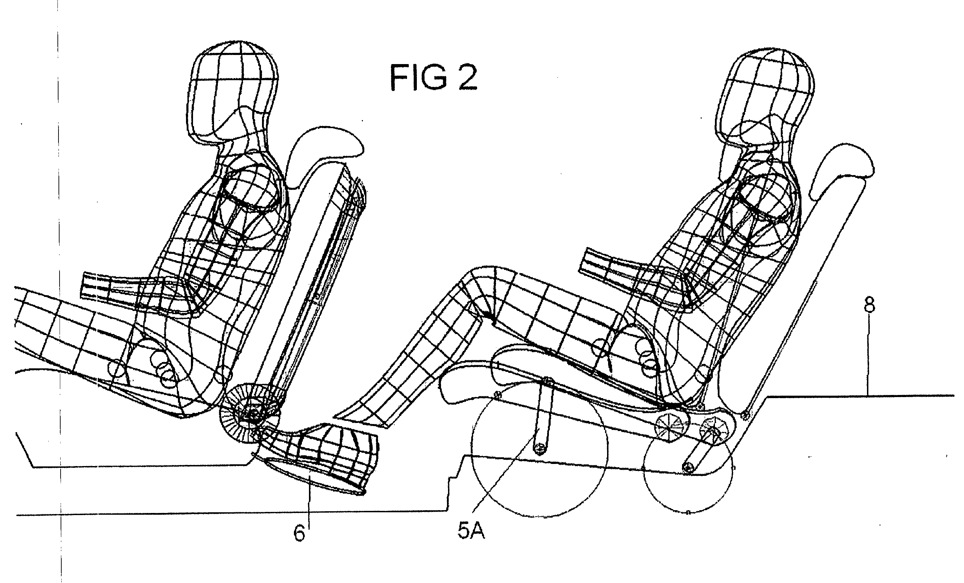

La figure 2 montre à la fois le siège en position normale et en position de confort.

Lorsqu'on bascule l'assise, on bascule également le dossier dans la mesure où ce dernier est solidaire de l'assise.

Cette position est dite de confort du fait que le poids du corps du passager repose différemment sur le siège. La charge est plus importante au niveau du dos du passager.

La répartition du poids du corps augmente au niveau du dossier et diminue au niveau de l'assise.

On prévoira, accessoirement, un repose-pied 6 accroché sur le siège situé devant.

Ce repose-pied sera monté sur un axe transversal de sorte qu'il puisse être rabattu contre le siège avant quant il n'est pas utilisé.

Avantageusement, ces moyens 5 dits de manoeuvre permettent en outre de déplacer le siège de sa position normale vers une position dite compactée (figure 3) où le siège est avancé vers l'avant avec l'assise se rapprochant du plancher sur lequel le siège prend appui.

La figure 3 montre le siège en position normale et le siège en position compactée, le dossier étant rabattu contre l'assise par basculement vers l'avant.

Ces moyens 5 vont non seulement déplacer le siège de l'avant vers l'arrière mais vont aussi modifier l'inclinaison de l'assise.

Dans une forme de réalisation, ces moyens 5 dits de manoeuvre comprennent des biellettes à l'avant et à l'arrière.

Ces biellettes sont, par exemple, montées de sorte qu'en position confort les biellettes avants 5A sont sensiblement verticales et les biellettes arrières 5B sont inclinées vers l'arrière.

les orientations angulaires des biellettes avants et arrières sont déterminées pour que le déplacement du siège de sa position normale vers une position de confort lève le bord avant de l'assise.

Ainsi en déplaçant l'assise vers l'avant, on abaisse le bord avant de l'assise vers le bas dans son déplacement en translation et on remonte l'arrière de l'assise jusqu'à passer par un point de hauteur maximal qui n'est pas nécessairement la position que prendront les biellettes arrières lorsque le siège est en position dite normale. Avec des moyens 5 dits de manoeuvre simples, on obtient un combinaison des mouvements du siège explicités plus haut.

Dans une autre variante de réalisation, les biellettes 5A à l'avant seront de longueurs différentes de celles à l'arrière. De préférence, les biellettes avants 5A seront plus longues que les biellettes arrières.

Sur la figure 2, on voit qu'en position normale, les biellettes à l'avant et à l'arrière sont inclinées vers l'avant.

En déplaçant l'assise du siège vers l'avant, on constate que cette assise se rapproche du plancher pour passer en position compactée.

On peut alors rabattre le dossier 3 vers l'avant.

Sous réserve que l'amplitude du déplacement en hauteur soit suffisante et de la différence de niveau entre le plancher portant le siège et le plancher du coffre, la face arrière du dossier pourra se trouver dans le même plan que le plancher du coffre.

Il peut être avantageux de prévoir une plaquette 7 dite d'obturation disposée au dos du siège en sorte de fermer l'espace entre le plancher 8 du coffre et le dossier. Cette plaquette sera articulée par son bord inférieur sur le siège.

Par combinaison des longueurs de biellettes et leurs orientations angulaires, on pourra s'adapter aux mouvements choisis ainsi qu'aux spécificités des véhicules recevant ces sièges avec le dispositif de manoeuvre.

Dans une variante de réalisation illustrés figures 4 et 5, au lieu de biellettes, on peut utiliser des excentriques ou des surfaces de came. Il s'agit de moyens qui, par rapport à un point fixe vont faire décrire à un point mobile, une trajectoire courbe, la combinaison de ces moyens faisant varier l'inclinaison du siège tout en le déplaçant suivant l'axe longitudinal du véhicule.

En figures 4 et 5, on a représenté une version simplifiée comportant au moins une came 5C uniquement à l'avant. Ces cames 5C permettent de lever l'assise 2 et de reculer le siège qui est alors monté coulissant sur un guide 9.

L'arrière de l'assise est articulé sur une pièce 10 qui coulisse sur le guide 9 alors que la came 5C solidaire de l'assise coopère avec une pièce 5D fixe.

Un moteur peut être accouplé à l'axe de rotation de la came.

En variante, non représentée, la came 5C peut être portée par le plancher et la pièce 5D qui coopère avec cette came est portée par l'assise.

La pièce fixe est soit portée par la caisse du véhicule soit par le siège.

La partie arrière de l'assise peut également être montée sur un système de came pour obtenir un mouvement du siège plus complexe comme dans le cas de la solution présentée aux figures 1 à 3.

Pour simplifier la compréhension, le dessin ne fait apparaître qu'une ébauche de came.

Ne sont pas représentés, les moyens retenant le siège sur le plancher.

On pourrait également prévoir une combinaison de biellettes et de cames telle que des biellettes à l'avant et des cames à l'arrière.

## Revendications

1. Dispositif de manoeuvre d'un siège de voiture comprenant une assise (2) et un dossier (3), ce dispositif de manoeuvre étant **caractérisé en ce qu'**il comprend des moyens(5) pour, à partir d'une position dite normale du siège, déplacer le siège vers une position dite de confort où le siège est reculé tout en le basculant en sorte de lever le bord avant de l'assise.

2. Dispositif de manoeuvre d'un siège de voiture selon la revendication 1 **caractérisé en ce que** les moyens (5) permettent en outre de déplacer le siège de sa position normale vers une position dite compactée où le siège est avancé vers l'avant avec l'assise se rapprochant du plancher sur lequel le siège prend appui.

3. Dispositif de manoeuvre d'un siège de voiture selon la revendication 1 ou la revendication 2 **caractérisé en ce que** les moyens (5) comprennent des biellettes (5A,5B).

4. Dispositif de manoeuvre d'un siège de voiture selon la revendication 3 **caractérisé en ce qu'**il comprend des biellettes à l'avant et à l'arrière de l'assise.

5. Dispositif de manoeuvre d'un siège de voiture selon la revendication 4 **caractérisé en ce que** les biellettes avants sont plus longues que les biellettes arrières.

6. Dispositif de manoeuvre d'un siège de voiture selon la revendication 4 ou 5 **caractérisé en ce que** les orientations angulaires des biellettes avants et arrières sont déterminées pour que le déplacement du siège de sa position normale vers une position de confort lève le bord avant de l'assise.

7. Dispositif de manoeuvre d'un siège de voiture selon la revendication 1 ou 2 **caractérise en ce que** les moyens (5) comprennent des cames ou excentriques.

8. Dispositif de manoeuvre d'un siège de voiture selon la revendication 7 **caractérisé en ce que** l'arrière de l'assise est articulé sur une pièce (10) qui coulisse sur un guide (9) alors que la came (5C) ou l'excentrique coopère avec une pièce (5D) fixe solidaire de l'assise ou de la caisse.

9. Siège de véhicule **caractérisé en ce qu'**il comprend un dispositif de manoeuvre selon l'une quelconque des revendications 1 à 8.

10. Siège de voiture selon la revendication 9 **caractérisé en ce qu'**il comprend une plaquette (7) dite d'obturation disposée au dos du siège en sorte de fermer l'espace entre le plancher (8) du coffre et le dossier.
